# EUROPÄISCHE PATENTSCHRIFT

(11) **EP 2 644 408 B1**
(45) Veröffentlichungstag und Bekanntmachung des Hinweises auf die Patenterteilung: **14.01.2015**
(21) Anmeldenummer: 13155045.1
(22) Anmeldetag: 13.02.2013
(51) Int. Cl.: B60C 11/12

(54) **Laufstreifenprofil eines Fahrzeugluftreifens**
Tread profile of a vehicle tyre
Profil de bande de roulement d'un bandage pneumatique de véhicule

(30) Priorität: 26.03.2012 DE 102012102560
(43) Veröffentlichungstag der Anmeldung: 02.10.2013
(73) Patentinhaber: Continental Reifen Deutschland GmbH, 30165 Hannover (DE)
(72) Erfinder: Seidel, Michael, 30171 Hannover (DE)
(74) Vertreter: Finger, Karsten

(56) Entgegenhaltungen:
- EP-A1- 2 311 655
- EP-A2- 2 191 984
- KR-B1- 101 038 020

## Beschreibung

Die Erfindung betrifft ein Laufstreifenprofil eines Fahrzeugluftreifens - insbesondere für Nutzfahrzeuge - mit radial erhabenen, durch Rillen voneinander beabstandeten Profilelementen mit schmalen linien- oder nutförmigen Vertiefungen in einem oder mehreren Profilelementen, die jeweils mit ihrer Haupterstreckungsrichtungskomponente in axialer Richtung A des Fahrzeugluftreifens ausgerichtet sich durch das jeweilige Profilelement hindurch erstrecken und in das Profilelement begrenzende Rillen münden, wobei ein oder mehrere schmale linien- oder nutförmige Vertiefungen in radialer Richtung R mit einem radial inneren Erstreckungsabschnitt der Erstreckungshöhe T₂ und einem radial äußeren Erstreckungsbereich der Erstreckungshöhe T₁ im Reifen ausgebildet sind, wobei sich der radial innere Erstreckungsabschnitt in radialer Richtung R vom tiefsten Punkt des Vertiefungsgrundes bis zum radial äußeren Erstreckungsbereich und der radial äußere Erstreckungsbereich vom radial inneren Erstreckungsbereich bis zu der das Profilelement nach radial außen begrenzenden, die Bodenkontaktfläche bildenden Oberfläche erstreckt, und wobei die nutförmige Vertiefung im radial äußeren Erstreckungsbereich als Feineinschnitt mit einer Schnittbreite D und im radial inneren Erstreckungsbereich als rohrförmiger Öffnungskanal mit maximaler Öffnungsbreite B ausgebildet ist mit B ≥ (2D).

Derartige Laufstreifenprofile sind bekannt. Laufstreifenprofile für Fahrzeug-Reifen sind üblicherweise durch Rillen voneinander beabstandeten, radial erhabenen Profilelementen ausgebildet. Die Rillen ermöglichen dabei Void (Negativanteil des Profiles) zur Aufnahme von Wasser und zum Abfluss des Wassers aus dem Laufstreifenprofil. Die Profilelemente bilden mit ihren durch die Rillen gebildeten Flanken zusätzliche Griffkanten zum Griff auf nasser Oberfläche.

Bei einem Neureifen, bei dem die radial erhabenen Profilelemente noch ihre volle Profiltiefe aufweisen, bilden die Rillen ein mit ihrer über die volle Profiltiefe reichenden Rillentiefe ein großes Volumen zur Ableitung von Wasser auf. Die Profilelemente sind aufgrund ihrer vollen Profiltiefenausbildung noch flexibel. Die Profilelemente stehen bei einwirkenden Traktions- und Handlingkräften aufgrund der hierdurch bewirkten Deformation nur mit einem Teil ihrer radial nach außen wirkenden Oberfläche in vollem wirkenden Griffkontakt zur Straßenoberfläche, wodurch besonders Nassgriffeigenschaften negativ beeinflusst werden. Damit beim Neureifen Nassgriffeigenschaften nicht zu stark reduziert werden, werden die radial erhabenen Profilelemente in axialer Richtung A und in Umfangsrichtung U des Reifens relativ groß dimensioniert, um auf diese Weise eine relativ große theoretisch wirkende radial äußere Oberfläche zu erhalten, die mit der Straße in Berührkontakt kommen kann. Hierdurch wird der negative Einfluss des Verbiegens der Oberfläche in Grenzen gehalten. Zur Verbesserung der Nassgriffwirkung werden hierzu vereinzelt in die Profilelemente feine Einschnitte ausgebildet, die bei Optimierung ohne größere zusätzliche Flexibilität deutlich verbesserte Griffwirkung auf nassen Oberflächen ermöglichen.

Im Laufe des Lebenszyklus wird die Profiltiefe des Laufstreifenprofils aufgrund des Abriebs zunehmend reduziert. Die verbleibenden Profilelemente werden mit ihrer reduzierten Profiltiefe steifer, wodurch die die Profilelemente in radialer Richtung nach außen begrenzende Oberfläche geringeren Deformationen unterliegen und einen verbesserten Nassgriff ermöglichen. Allerdings nimmt mit zunehmender Lebensdauer auch das Volumen der verbleibenden Rillen im Reifenprofil ab, wodurch auch die Fähigkeit Wasser aus dem Reifenprofil abzuleiten abnimmt und die Aquaplaninggefahr steigt.

Die Ausbildung zusätzlicher Rillen im Reifenprofil ermöglicht zwar ein zusätzliches Volumen auch für den späteren Lebenszyklus und somit im späteren Lebenszyklus eine Reduzierung der Aquaplaninggefahr. Die zusätzlichen Rillen bewirken jedoch im Neureifen eine zusätzliche Reduktion der wirkenden Straßenkontaktoberfläche aufgrund des größeren Negativanteils des Profils und darüber hinaus zusätzliche Flexibilität der ohnehin bereits sehr flexiblen Profilelemente, wodurch Biegeeffekte der Profilelemente und hierdurch bedingt die mit der Straßenoberfläche in Kontakt tretenden Reifenoberfläche weiter reduziert wird. Hierdurch wird die Nassgriffeignung am Neureifen weiter reduziert.

Für Nutzfahrzeugreifen wurde vereinzelt bereits vorgeschlagen, in Profilelementen Einschnitte auszubilden, die im radial äußeren Erstreckungsbereich als reiner Feineinschnitt und in ihrem radial inneren Erstreckungsbereich als rohrförmigen Durchgangskanal zur Ermöglichung des Durchflusses ausgebildet sind. Dies ermöglicht beim Neureifenprofil die volle Wirkoberfläche des radial erhabenen Profilelementes unter Sicherstellung des Abflusses des Wasservolumens durch die die Profilelemente trennenden Rillen mit deren großem Rillenvolumen und unter großer wirkender Straßenkontaktoberfläche zwischen Profilelement und Straßenoberfläche. Ab Erreichen einer bestimmten Lebensdauer ist das Profil so stark reduziert, dass der als Feineinschnitt ausgebildete radial äußere Erstreckungsbereich abgefahren ist und der radial innere als Durchflusskanal ausgebildete Erstreckungsbereich zur zusätzlichen Rille geöffnet wird. Dies ermöglicht dann, dass trotz geringerer verbleibender Profiltiefe über diese zusätzlich geschaffenen Rillen mit dem damit verbundenen zusätzlichen Rillenvolumen zusätzliches Wasservolumen abgeführt werden kann. Hierdurch kann die Aquaplaninggefahr auch bei abgefahrenen Reifen reduziert werden. Darüber hinaus kann hierdurch die Taktionsfähigkeit auf Schnee und losem Untergrund erhöht werden.

Gerade in den mit ihrer Haupterstreckungskomponente in axialer Richtung A des Reifens ausgebildeten Einschnitten muss nach Öffnen des breiten Durchgangskanals ausreichend Flexibilität zum Durchlaufen des Reifenlatsches gewährleistet sein.

Um möglichst lange während dieses späten Lebenszyklusses diese voidverstärkende Wirkung aufrecht zu erhalten, ist es wünschenswert, den Vertiefungsgrund der kanalförmigen Durchflussöffnung möglichst tief in dem Profil auszubilden. Die optisch erkennbare Tiefe des Rillengrundes ist dabei für den Nutzer des Reifens auch ein Zeichen für die tatsächliche vorhandene, nutzbare Rillentiefe. Andererseits führt eine große Tiefe des Rillengrundes bei derartigen Ausbildungen dazu, dass die verbleibende Materialstärke des Gummimaterials zwischen Gürtel und Durchgangskanal nur entsprechend klein ausgebildet wird, wodurch deren Widerstand gegen ein Eindringen von Fremdkörpern während dieses letzten Lebenszyklus mit geöffnetem Durchgangskanal begrenzt wird. Wird der Rillengrund des Durchgangskanals in geringerer Tiefe im Profil ausgebildet, wird zwar die verbleibende Masse an Gummimaterial erhöht und somit der Widerstand gegen das Eindringen eines von Fremdkörpern in den Reifen. Es wird aber auch dem Nutzer der Eindruck vermittelt, als sei aufgrund der geringen verbleibenden Rillentiefe nach Öffnen des Durchgangskanals der Reifen gar nicht mehr einsetzbar, obwohl die Hauptrillen noch über ausreichend Profiltiefe zum weiteren Einsatz verfügen.

Aus der EP 2 311 655 A1 ist es von Pkw-Reifen bekannt, bei derartigen Reifen mit Profilelementen mit linien- oder nutförmigen Vertiefungen, die in ihrem radial unteren Bereich einen sich öffnenden Durchgangskanal aufweisen zur Erzielung zusätzlicher Nassgriffkanten im Vertiefungsgrund linienförmige Erhebungen auszubilden, die im letzten Lebenszyklus des Pkw-Reifens zusätzlichen Nassgriff ermöglichen können. Der bei Nutzfahrzeugreifen mit seinen tiefen Profilrillen und seinen besonderen Einsätzen wichtige Zielkonflikt aus Bereitstellung von ausreichend Void (Negativanteil des Profils) zur Wasseraufnahme einerseits und besonderem Schutz gegen Eindringen von Fremdkörpern andererseits, werden durch die feinen linienförmigen Strukturen nicht gelöst.

Der Erfindung liegt daher die Aufgabe zugrunde mit einfachen Mitteln ein Laufstreifenprofil zu schaffen, bei welchem bei guten Abriebeigenschaften und gutem Rollwiderstand gute Drainage- und Traktions-Eigenschaften über den Lebenszyklus des Reifens hinweg im Neuzustand und im späteren Lebenszyklus mit durch Abrieb reduzierter Profiltiefe trotz gutem Widerstand gegen Eindringen von Fremdkörpern möglichst lange ermöglicht und erkennbar gemacht werden können.

Erfindungsgemäß wird die Aufgabe durch die Ausbildung eines Laufstreifenprofils eines Fahrzeugluftreifens - insbesondere für Nutzfahrzeuge - mit radial erhabenen, durch Rillen voneinander beabstandeten Profilelementen mit schmalen linien- oder nutförmigen Vertiefungen in einem oder mehreren Profilelementen, die jeweils mit ihrer Haupterstreckungsrichtungskomponente in axialer Richtung A des Fahrzeugluftreifens ausgerichtet sich durch das jeweilige Profilelement hindurch erstrecken und in das Profilelement begrenzende Rillen münden, wobei ein oder mehrere schmale linien- oder nutförmige Vertiefungen in radialer Richtung R mit einem radial inneren Erstreckungsabschnitt der Erstreckungshöhe T₂ und einem radial äußeren Erstreckungsbereich der Erstreckungshöhe T₁ im Reifen ausgebildet sind, wobei sich der radial innere Erstreckungsabschnitt in radialer Richtung R vom tiefsten Punkt des Vertiefungsgrundes bis zum radial äußeren Erstreckungsbereich und der radial äußere Erstreckungsbereich vom radial inneren Erstreckungsbereich bis zu der das Profilelement nach radial außen begrenzenden, die Bodenkontaktfläche bildenden Oberfläche erstreckt, und wobei die nutförmige Vertiefung im radial äußeren Erstreckungsbereich als Feineinschnitt mit einer Schnittbreite D und im radial inneren Erstreckungsbereich als rohrförmiger Öffnungskanal mit maximaler Öffnungsbreite B ausgebildet ist mit B ≥ (2D), gemäß den Merkmalen von Anspruch 1 gelöst, an dem den rohrförmigen Öffnungskanal nach radial innen begrenzenden Vertiefungsgrund längs der - insbesondere gesamten - Erstreckungslänge des Vertiefungsgrundes verteilt mehrere kuppelförmige radiale Erhebungen ausgebildet sind

Durch diese Ausbildung wird ermöglicht, dass der Nutzfahrzeugreifen mit im Neuzustand im Wesentlichen sehr umfangssteifen Profilelementen ausgebildet werden kann, die ausreichend Umfangssteifigkeit aufweisen zur Erzielung guter Abriebeigenschaften und eines guten Rollwiderstandes, und dass dennoch nach Abrieb des Laufstreifenprofiles bis zur Öffnung des Durchgangskanales zusätzliches Void (Negativanteil des Profils) zur Verfügung gestellt werden kann, wodurch der Voidverlust der anderen Hauptrillen des Reifens zumindest teilweise ausgeglichen und somit über eine lange Lebensdauer des Reifens hinweg großes Void zur Aufnahme und zur Ableitung des Wassers zur Verfügung gestellt wird. Die Ausbildung der Durchgangsöffnung mit den kuppelförmigen radialen Erhebungen ermöglicht darüber hinaus eine tiefe Ausbildung des Rillengrundes, die auch für den Nutzer als tiefe Rille erkennbar ist und somit deutlich erkennen lässt, dass zusätzliches Void zur Aufnahme und zur Ableitung des Wassers zur Verfügung steht und der Reifen noch über ausreichende Restprofiltiefe verfügt. Die kuppelförmigen Erhebungen ermöglichen dabei dennoch die Bereitstellung deutlich verstärkender Materialerhöhungen des Rillengrundes, die einen zusätzlichen Schutz des Rillengrundes bieten. Die Kuppelform ist dabei besonders unanfällig gegen Beschädigung und ungewollten Abrieb der schützenden Erhebung. Die Kuppelförmigen Erhebungen ermöglichen durch ihre Höhe, Breite und Form somit eine Verstärkung des Rillengrundes an sich und gleichzeitig einen Schutz gegen die Gefahr des Eindringens von Fremdkörpern und reduzieren zusätzlich die Gefahr des Eindringens, da sie das Auswerfen von bereits teilweise eingedrungenen Steinen in das Profil erleichtern. Die Durchwalkbewegung der nach Öffnen der Durchgangsrille gebildeten zusätzlichen Rille und der von ihr dann begrenzten Profilelemente während des Abrollens wird durch die kuppelförmigen Erhebungen weitgehend unbeeinflusst ermöglicht. Das Abrollen und andere Performanceeigenschaften werden somit nicht negativ beeinflusst.

Besonders vorteilhaft ist die Ausbildung eines Laufstreifenprofils gemäß den Merkmalen von Anspruch 2, bei dem die kuppelförmigen Erhebungen in ihren Schnittebenen längs ihrer radialen Erstreckung von ihrem Scheitelpunkt bis zum Vertiefungsgrund mit kreisförmigen, ovale oder elliptische Schnittkonturlinien ausgebildet sind. Hierdurch kann in einfacher Weise eine sehr robuste Ausbildung mit gut umströmbaren, kantenfreien Erhebungen ermöglicht werden.

Besonders vorteilhaft ist die Ausbildung eines Laufstreifenprofils gemäß den Merkmalen von Anspruch 3, bei dem die kuppelförmigen radialen Erhebungen kugelkalottenförmig ausgebildet sind. Dies ermöglicht die Umsetzung eines optimalen Kompromiss aus hoher, gewünschter Robustheit bei geringem Volumen und Materialeinsatz für die Erhebungen und aus verbleibendem, von den Erhebungen baulich unbeeinflusstem Rillengrund.

Besonders vorteilhaft ist die Ausbildung eines Laufstreifenprofils gemäß den Merkmalen von Anspruch 4, bei dem die kuppelförmigen Erhebungen mit einer aus dem Vertiefungsgrund bis zum Scheitelpunkt der kuppelförmigen Erhebung in radialer Richtung R des Reifens gemessenen maximalen Erstreckungshöhe h₁ mit 1,5mm≤ h₁≤3mm ausgebildet sind. Hierdurch kann in einfacher Weise ein optimaler Kompromiss aus hoher, gewünschter Robustheit bei geringem Volumen und Materialeinsatz für die Erhebungen und aus verbleibendem, von den Erhebungen baulich unbeeinflusstem Rillengrund erzielt werden.

Besonders vorteilhaft ist die Ausbildung eines Laufstreifenprofils gemäß den Merkmalen von Anspruch 5, wobei die kuppelförmigen Erhebungen mit einer im Vertiefungsgrund gemessenen in Erstreckungsrichtung des Vertiefungsgrundes gemessenen maximalen Erstreckungslänge B₁ mit 2mm≤ B₁ ≤ 6mm ausgebildet sind. Hierdurch kann in einfacher Weise eine Optimierung aus hoher, gewünschter Robustheit bei geringem Volumen und Materialeinsatz für die Erhebungen einerseits und aus verbleibendem, von den Erhebungen baulich unbeeinflusstem Rillengrund erzielt werden.

Besonders vorteilhaft ist die Ausbildung eines Laufstreifenprofils gemäß den Merkmalen von Anspruch 6, wobei die Profilelemente Profilbänder - insbesondere Umfangsrippen - sind, welche durch Umfangsrillen begrenzt werden. Hierdurch kann gerade in den hinsichtlich ihrer Beweglichkeit besonders eingeschränkten Profilbändern die Wirkung der linien- oder nutförmigen Vertiefungen und der im Rillengrund des Durchgangskanals ausgebildeten Erhebungen im Reifen optimal genutzt werden.

Besonders vorteilhaft ist die Ausbildung eines Laufstreifenprofils gemäß den Merkmalen von Anspruch 7, mit einer Erstreckungshöhe T₂ des radial inneren Erstreckungsabschnitts, die mit 2h₁≤T₂ ≤(2/3)T ausgebildet ist, wobei T die maximale Erstreckungshöhe der linien-oder nutförmigen Vertiefung ist. Hierdurch kann in einfacher Weise ein guter Kompromiss aus hoher, gewünschter Robustheit bei geringem Volumen und Materialeinsatz für die Erhebungen einerseits und aus verbleibendem, von den Erhebungen baulich unbeeinflusstem Rillengrund umgesetzt werden.

Besonders vorteilhaft ist die Ausbildung eines Laufstreifenprofils gemäß den Merkmalen von Anspruch 8 mit einer Erstreckungshöhe T₂ des radial inneren Erstreckungsabschnitts und mit einer Erstreckungshöhe T₁ des radial äußeren Erstreckungsabschnitts, die mit mit (2T₁) ≥T₂ > T₁ ausgebildet ist.

Besonders vorteilhaft ist die Ausbildung eines Laufstreifenprofils gemäß den Merkmalen von Anspruch 9 mit einer maximalen Erstreckungshöhe T der linien- oder nutförmigen Vertiefung mit 10mm≤T≤25mm.

Besonders vorteilhaft ist die Ausbildung eines Laufstreifenprofils gemäß den Merkmalen von Anspruch 10, bei welchem die Öffnungsbreite B des Öffnungskanals (8) mit 1,5mm ≤ B ≤ 6mm ausgebildet ist.

Besonders vorteilhaft ist die Ausbildung eines Laufstreifenprofils gemäß den Merkmalen von Anspruch 11, bei welchem der Fahrzeugluftreifen ein Traktionsreifen für Nutzfahrzeuge ist. Gerade hier kann aufgrund der besonderen Anforderungen und Belastungen dieser Reifen die Wirkung der linien- oder nutförmigen Vertiefungen und der im Rillengrund des Durchgangskanals ausgebildeten Erhebungen im Reifen optimal genutzt werden.

Die Erfindung wird im Folgenden an Hand der in den Figuren 1 bis 4 dargestellten Ausführungsbeispiele eines Nutzfahrzeugreifens für die Antriebsachse näher erläutert. Hierin zeigen
- Fig. 1: Abschnitt des Laufstreifenprofil eines Fahrzeugluftreifens mit Umfangsrippen in Draufsicht,
- Fig. 2: Querschnittsdarstellung des Laufstreifenprofilabschnitts von Fig. gemäß Schnitt II-II von Fig. 1,
- Fig. 3: Querschnittsdarstellung des Laufstreifenprofilabschnitts von Fig. 1 gemäß Schnitt III-III von Fig.2,
- Fig. 4: Laufstreifenprofilabschnitt der Figuren 1 bis 3 gemäß Schnitt IV-IV von Fig.3.

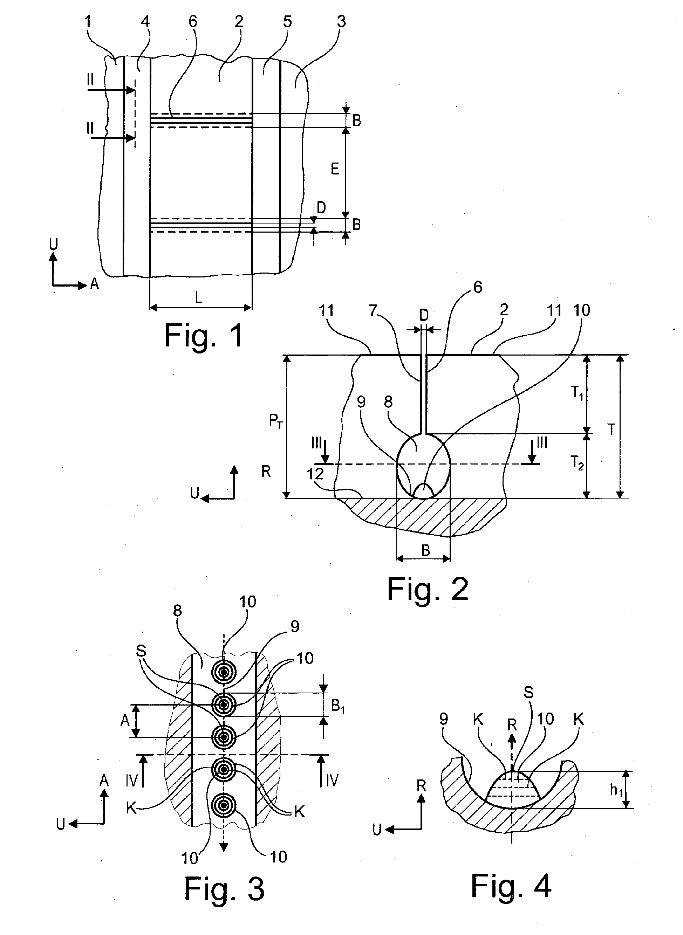

Die Figuren 1 bis 4 zeigen einen Ausschnitt eines Laufstreifenprofils eines Fahrzeugluftreifens radialer Bauart für Nutzfahrzeuge. Der Nutzfahrzeugreifen ist ein Nutzfahrzeugreifen eines Traktionsreifens, welcher auf der Antriebsachse eines Nutzfahrzeuges eingesetzt wird.

Wie in den Figuren 1 und 2 dargestellt ist, weist das Laufstreifenprofil in bekannter Weise innerhalb der Bodenaufstandsfläche zwei über den gesamten Umfang des Fahrzeugluftreifens erstreckte in Umfangsrichtung ausgerichtete und in axialer Richtung A benachbarte Umfangsrillen 4 und 5 und drei ebenfalls in Umfangsrichtung U ausgerichtete und über den gesamten Umfang erstreckte Umfangsrippen 1,2 und 3 auf, von denen die Umfangsrippe 2 in axialer Richtung A von den Umfangsrillen 4 und 5, die Umfangsrippe 1 in axialer Richtung A von der Umfangsrille 4 und die Umfangsrippe 3 in axialer Richtung A von der Umfangsrille 5 axial begrenzt ist.

Wie in Fig. 2 zu erkennen ist, erstrecken sich die Umfangsrippen 1,2 und 3 dabei in radialer Richtung R aus dem Rillengrund der Umfangsrillen 4 bzw. 5 bis zu der die Umfangsrippen 1,2 bzw. 3 jeweils nach radial außen begrenzenden, die Straßenkontaktoberfläche bildenden Mantelfläche 11 über ein in radialer Richtung R gemessenes Erstreckungsmaß P_{T}, welches die Profiltiefe im Bereich der Umfangsrillen 4 bzw. 5 am Neureifen angibt.

Die Umfangsrippe 2 ist über den Umfang des Fahrzeugluftreifens verteilt jeweils mit Einschnitten 6 versehen, die sich in axialer Richtung A jeweils durch die gesamte Erstreckungsbreite L der Umfangsrippe 2 erstrecken, wobei die Einschnitte 6 auf der einen axialen Begrenzungsseite der Umfangsrippe 2 in die Umfangsrille 4 und auf der anderen axialen Begrenzungsseite der Umfangsrippe 2 in die Umfangsrille 5 münden.

Die Einschnitte 6 erstrecken sich in radialer Richtung R - wie in Figur 2 zu erkennen - über eine in radialer Richtung R gemessene Erstreckungstiefe T mit 10mm≤T≤25mm ausgehend von der radial äußeren, die Umfangsrippe 2 nach außen begrenzenden Mantelfläche 11 bis zu dem den Einschnitt 6 nach radial innen begrenzenden Vertiefungsgrund 9. Die Einschnitte 6 sind dabei jeweils in ihrem radial äußeren Erstreckungsabschnitt als Feineinschnitt 7 mit der Einschnittsbreite D und in ihrem radial inneren Erstreckungsabschnitt als rohrförmiger Durchlasskanal bzw. Durchflusskanal 8 der Rohrbreite B ausgebildet. Der Feineinschnitt 7 erstreckt sich dabei ausgehend von der radial äußeren, die Umfangsrippe 1 nach außen begrenzenden Mantelfläche 11 über ein radiales Erstreckungsmaß T₁ nach radial innen. Am radialen Erstreckungsende des Feineinschnittes 7 beginnt der der radiale Erstreckungsbereich des Durchlasskanals 8, welcher sich in radialer Richtung R über ein Erstreckungsmaß T₂ nach innen bis zum Vertiefungsgrund 9, welcher den Durchlasskanal 8 nach radial innen begrenzt, erstreckt. Der rohrförmige Durchlasskanal 8 hat einen im Wesentlichen ovalen Öffnungsquerschnitt mit einer senkrecht zur Erstreckungsrichtung des Durchlasskanals 8 sowie zur radialen Richtung R ausgebildeten maximalen Öffnungsbreite B, wobei die maximale Öffnungsbreite mit B ≥ (2D) ausgebildet ist und wobei die radiale Erstreckung T₂ des Durchlasskanals 8 mit T₂ > B ausgebildet ist. Die radiale Erstreckung T₂ des Durchlasskanals 8 und die radiale Erstreckung T₁ des Feineinschnitts 7 sind dabei derart ausgebildet, dass (2T₁)≥T₂ >T₁ ausgebildet ist.

Die Erstreckungstiefe T der Einschnitte 6 ist im dargestellten Ausführungsbeispiel mit T= P_{T} ausgebildet.

Die Breite B ist dabei derart ausgebildet, dass 1,5mm ≤ B ≤ 6mm ausgebildet ist. Die Schnittbreite D des Feineinschnitts ist 0,5mm≤D≤1,5mm gewählt.

In einer besonderen Ausführung ist die radiale Erstreckung T₂ des Durchlasskanals 8 mit 2h₁≤T₂≤(2/3)T ausgebildet.

Im Vertiefungsgrund 9 sind über den gesamten Erstreckungsbereich der Durchflusskanals 8 parallel zur Erstreckung des Durchlasskanals 8 hintereinander verteilt angeordnet eine Vielzahl von kugelkalottenförmig ausgebildeten Erhebungen 10 ausgebildet. Die Erhebungen sind mit einer in radialer Richtung R vom tiefsten Punkt des Vertiefungsgrundes 9 bis zum Scheitelpunkt S der Erhebung 10 gemessenen Erstreckungshöhe h₁ und mit einer im Vertiefungsgrund 9 gemessenen in Erstreckungsrichtung des Vertiefungsgrundes 9 gemessenen maximalen Erstreckungslänge B₁ ausgebildet mit 2mm≤ B₁ ≤ 6mm und mit 1,5mm≤ h₁≤3mm.

In Figur 4 ist die durch den Scheitelpunkt S einer kalottenförmigen Erhebung 10erstreckte radiale Richtung R des Reifens sowie in verschiedenen radialen Positionen die jeweilige Schnittlinie K der kalottenförmigen Erhebung 10 in der radialen Position eingezeichnet. In Figur 3 ist zu erkennen, die Schnittlinien K konzentrische Kreise zu der durch den Scheitelpunkt führenden Radialen bilden, wobei die Kreisradien der Schnittebenen längs der radialen Erstreckung nach radial innen bis zum Vertiefungsgrund 9 hin degressiv zunehmen.

Benachbarte kalottenförmige Erhebungen sind mit einem Abstand A zueinander angeordnet, wobei der Abstand A mit (1,5 B₁) ≤A≤ (4 B₁) jeweils den Abstand der Scheitelpunkte S der beiden kalottenförmigen Erhebungen 10 von einander angibt.

Im dargestellten Ausführungsbeispiel der Figuren 1 bis 4 erstreckt sich der Einschnitt 5 in axialer Richtung A des Fahrzeugluftreifens und der Feineinschnitt 6 ist mittensymmetrisch zum im Wesentlichen oval geformten Durchlasskanal 8 positioniert. Die Erhebungen 10 sind mit ihren Scheitelpunkten ebenfalls auf einer mittensymmetrisch zum Durchlasskanal 8 ausgerichteten Linie aufgereiht, welche sich parallel zum Durchlasskanal 8 und zum Feineinschnitt 6 durch die jeweilige Umfangsrippe 2 hin durch erstreckt. Im dargestellten Ausführungsbeispiel ist die Erstreckungslänge des Vertiefungsgrundes 9 durch die Erstreckungslänge L angegeben.

Die Figuren 2 und 4 zeigen auch die Querschnitte des Laufstreifenprofils in unterschiedlichen radialen Positionen bei unterschiedlich stark erfolgtem Abrieb. Figur 2 kann entnommen werden, dass mit zunehmend abgefahrenem Reifenprofil zunächst der Feineinschnitt 6 des Einschnitts 7 verschwindet und sich nach dem Verschwinden dann - wie in Fig. 4 zu erkennen ist - der Durchlasskanal 8 zu einer neuen Rille öffnet, wobei die Erhebungen 10 deutliche erkennbar aus dem durch den Vertiefungsgrund 9 gebildeten Rillengrund der neuen Rille emporragen. Rings um die Erhebung 10 ist - wie in Fig.3 und Fig. 4 zu sehen - die Tiefe der Rille deutlich zu optisch zu erkennen.

Die Querschnittsform des rohrförmigen Durchlasskanals 8 ist - wie oben beschrieben - im Wesentlichen oval. In alternativer - nicht dargestellter - Ausführung ist die Querschnittsform des rohrförmigen Durchlasskanals im Wesentlichen tropfenförmig mit nach radial innen hin verbreiterter Öffnungsbreite mit und nahezu flachem, fast ebenem Vertiefungsgrund ausgebildet. In anderer - nicht dargestellter - Ausführung ist der rohrförmige Durchlasskanal 8 mit einem Querschnitt ausgebildet, der nahezu rechteckig mit abgerundeten Ecken ausgebildet ist.

Die Einschnitte 6 sind im dargestellten Ausführungsbeispiel in der radial äußeren Oberfläche 11 geradlinig und in axialer Richtung A ausgerichtet. In einer anderen - nicht dargestellten Ausführung sind die Einschnitte 6 in der radial äußeren Oberfläche 11 unter Einschluss eines Neigungswinkels zur axialen Richtung A ausgerichtet, welcher kleiner oder gleich 30° gewählt ist. Beispielsweise ist der Neigungswinkel 10°.

In einer anderen Ausführung ist der Einschnitt 6 in seinem Verlauf in der radial äußeren Oberfläche 11 wellen- oder zickzackförmig verlaufend ausgebildet.

Im dargestellten Ausführungsbeispiel ist der Einschnitt 6 im Erstreckungsbereich des Feineinschnitts 7 in radialer Richtung R geradlinig erstreckt verlaufend ausgebildet.

In anderer -nicht dargestellter - Ausführung ist der Einschnitt 6 in seinem Verlauf des Feineinschnitts 7 in seiner radialen Erstreckung R nach innen hin geradlinig unter Einschluss eines Neigungswinkels zur Radialen R hin verlaufend ausgerichtet, wobei der Neigungswinkel kleiner oder gleich 10° - beispielsweise mit 5° - gewählt ist.

In anderer - nicht dargestellter - Ausführung ist der Einschnitt 6 mit seinem Feineinschnitt 7 längs seiner radialen Erstreckung von radial außen nach radial innen hin mit einem gekrümmten, zick-zack-förmigen oder wellenförmigen Verlauf ausgebildet.

Wie in Fig.1 dargestellt ist, sind über den Umfang des Fahrzeugluftreifens hinweg jeweils eine Vielzahl von Einschnitten 6 in der Umfangsrippe 2 ausgebildet, wobei in Umfangsrichtung U benachbarte Einschnitte 6 jeweils im Abstand E mit 20mm≤E≤80mm voneinander angeordnet sind. Der Abstand E wird dabei als der in Umfangsrichtung U des Fahrzeugluftreifens gemessene Abstand der kanalförmigen Durchgangsöffnungen 8 der beiden Einschnitte 6 in der die Umfangsrippe 2 begrenzenden Umfangsrille 5 bzw. 4 gemessen.

In einem Ausführungsbeispiel ist der Abstand E zwischen jeweils benachbarten Einschnitten 6 dabei über den Umfang des Fahrzeugluftreifens hinweg zwischen allen in Umfangsrichtung benachbarten Paaren von Einschnitten 6 jeweils gleich groß gewählt.

In einer anderen Ausführung ist der Abstand E zwischen in Umfangsrichtung U benachbarten Paaren von Einschnitten 6 über den Umfang des Fahrzeugluftreifens hinweg jeweils unterschiedlich groß gewählt ausgebildet. Beispielsweise ist der Abstand E zwischen in Umfangsrichtung U benachbarten Paaren von Einschnitten 6 über den Umfang des Fahrzeugluftreifens hinweg entsprechend einer für den Reifen ausgebildeten Pitchfolgenvariation des Laufstreifenprofils ausgebildet.

In Fig.1 ist ein Ausführungsbeispiel dargestellt, bei dem in der Umfangsrippe 2 lediglich Einschnitte 6 mit radial äußerem Feinabschnitt 7 und radial innerer Durchgangsöffnung 8 ausgebildet sind.

In anderer nicht dargestellter Ausführung sind zumindest zwischen einigen in Umfangsrichtung U benachbarten Einschnitten 6 zusätzlich in der radial äußeren Oberfläche 11 der Umfangsrippe 2 herkömmliche Feineinschnitte bekannter Art ausgebildet.

In dem in Fig. 1 dargestellten Ausführungsbeispiel ist lediglich die Umfangsrippe 2 mit entsprechenden Feineinschnitten 6 versehen ausgebildet.

In einem alternativen - nicht dargestellten - Ausführungsbeispiel ist auch eine der beiden benachbarten Umfangsrippen 1 oder 3 und in einem weiteren alternativen - nicht dargestellten - Ausführungsbeispiel sind beide benachbarten Umfangsrippen 1 und 3 mit entsprechend ausgebildeten Einschnitten 6 mit Feineinschnitt 7, kanalförmiger Öffnung 8 und Erhebungen 10 ausgebildet.

In den dargestellten Ausführungsbeispielen sind die Erhebungen 10 kugelkalottenförmig ausgebildet mit kreisförmig ausgebildeten Schnittlinien in den Schnittebenen, welche senkrecht zu der durch den Scheitelpunkt S ausgebildeten Radialen gebildet werden,.

In alternativer Ausführung bilden die Erhebungen Kalottenformen eines Paraboloiden oder eines Ellipsoiden, wobei eine Hauptachse des Paraboloiden bzw. des Ellipsoiden in radialer Richtung R des Reifens durch den Scheitelpunkt S der Erhebung erstreckt ist und dessen längste Hauptachse in Erstreckungsrichtung des Vertiefungsgrundes erstreckt ausgebildet ist. In den senkrecht zu der durch den Scheitelpunkt S verlaufenden Radialen gebildeten Schnittebenen sind bei diesen Ausbildungen die Schnittlinien elliptische oder ovale Schnittlinien, wobei die längere Hauptachse der Ellipse bzw. des Ovals jeweils längs der Erstreckungsrichtung des Vertiefungsgrundes ausgerichtet ist. Die Haupterstreckungslänge B₁ - gemessen im Vertiefungsgrund - ist dabei maximal dreimal so groß wie die senkrecht hierzu in der gleichen Schnittebene sich bei dem jeweiligen Ellipsoiden bzw. Paraboloiden ergebende Breite.

Im dargestellten Ausführungsbeispiel sind die radialen Erhebungen 10 alle mit gleichem Abstand A zueinander ausgebildet dargestellt. In anderer - nicht dargestellter - Ausführung variieren die Abstände A längs der Erstreckung des Vertiefungsgrundes 9.

In einer nicht dargestellten Ausführung eines Durchlasskanals 8 mit relativ großer Breite B sind die Erhebungen 10 längs der Erstreckungsrichtung des Vertiefungsgrundes 9 gemessen zur Mittensymmetrielinie des Durchlasskanals 8 im Vertiefungsgrund 9 versetzt angeordnet, wobei diese in einer Ausführung in alternierender Abfolge zur einen Seite und zur anderen Seite der Symmetrieachse versetzt angeordnet sind.

### Bezugszeichenliste

### (Teil der Beschreibung)

- 1: Umfangsrippe
- 2: Umfangsrippe
- 3: Umfangsrippe
- 4: Umfangsrille
- 5: Umfangsrille
- 6: Einschnitt
- 7: Feineinschnitt
- 8: Rohrförmiger Durchlasskanal
- 9: Vertiefungsgrund
- 10: kugelkalottenförmige Erhebung
- 11: Radial äußere Oberfläche
- 12: Rillengrund

## Patentansprüche

1. Laufstreifenprofil eines Fahrzeugluftreifens - insbesondere für Nutzfahrzeuge - mit radial erhabenen, durch Rillen (4,5) voneinander beabstandeten Profilelementen (1,2,3) mit schmalen linien- oder nutförmigen Vertiefungen (6) in einem oder mehreren Profilelementen (1), die jeweils mit ihrer Haupterstreckungsrichtungskomponente in axialer Richtung A des Fahrzeugluftreifens ausgerichtet sich durch das jeweilige Profilelement (1) hindurch erstrecken und in das Profilelement (1) begrenzende Rillen (4,5) münden, wobei ein oder mehrere schmale linien- oder nutförmige Vertiefungen (6) in radialer Richtung R mit einem radial inneren Erstreckungsabschnitt der Erstreckungshöhe T₂ und einem radial äußeren Erstreckungsbereich der Erstreckungshöhe T₁ im Reifen ausgebildet sind, wobei sich der radial innere Erstreckungsabschnitt in radialer Richtung R vom tiefsten Punkt des Vertiefungsgrundes (9) bis zum radial äußeren Erstreckungsbereich und der radial äußere Erstreckungsbereich vom radial inneren Erstreckungsbereich bis zu der das Profilelement (1) nach radial außen begrenzenden, die Bodenkontaktfläche bildenden Oberfläche (11) erstreckt, und wobei die nutförmige Vertiefung (6) im radial äußeren Erstreckungsbereich als Feineinschnitt (7) mit einer Schnittbreite D und im radial inneren Erstreckungsbereich als rohrförmiger Öffnungskanal (8) mit maximaler Öffnungsbreite B ausgebildet ist mit B ≥ (2D),
**dadurch gekennzeichnet,**
**dass** an dem den rohrförmigen Öffnungskanal (8) nach radial innen begrenzenden Vertiefungsgrund (9) längs der - insbesondere gesamten - Erstreckungslänge des Vertiefungsgrundes (9) verteilt mehrere kuppelförmige radiale Erhebungen (10) ausgebildet sind.

2. Laufstreifenprofil gemäß den Merkmalen von Anspruch 1,
wobei die kuppelförmigen Erhebungen (10) in ihren Schnittebenen längs ihrer radialen Erstreckung von ihrem Scheitelpunkt (S) bis zum Vertiefungsgrund (9) mit kreisförmigen, ovale oder elliptische Schnittkonturlinien ausgebildet sind.

3. Laufstreifenprofil gemäß den Merkmalen von Anspruch 1 oder 2,
wobei die kuppelförmigen radialen Erhebungen (10) kugelkalottenförmig ausgebildet sind.

4. Laufstreifenprofil gemäß den Merkmalen von einem der vorangegangenen Ansprüche,
wobei die kuppelförmigen Erhebungen (10) mit einer aus dem Vertiefungsgrund (9) bis zum Scheitelpunkt (S) der kuppelförmigen Erhebung (10) in radialer Richtung R des Reifens gemessenen maximalen Erstreckungshöhe h₁ mit 1,5mm≤ h₁≤3mm ausgebildet sind.

5. Laufstreifenprofil gemäß den Merkmalen von einem der vorangegangenen Ansprüche,
wobei die kuppelförmigen Erhebungen (10) mit einer im Vertiefungsgrund (9) gemessenen in Erstreckungsrichtung des Vertiefungsgrundes (10) gemessenen maximalen Erstreckungslänge B₁ mit 2mm≤ B₁ ≤ 6mm ausgebildet sind.

6. Laufstreifenprofil gemäß den Merkmalen von einem der vorangegangenen Ansprüche,
wobei die Profilelemente (2) Profilbänder - insbesondere Umfangsrippen - sind, welche durch Umfangsrillen (4,3) begrenzt werden.

7. Laufstreifenprofil gemäß den Merkmalen von einem der vorangegangenen Ansprüche,
mit einer Erstreckungshöhe T₂ des radial inneren Erstreckungsabschnitts (8), die mit 2h₁≤T₂ ≤(2/3)T ausgebildet ist, wobei T die maximale Erstreckungshöhe der linien- oder nutförmigen Vertiefung (6) ist.

8. Laufstreifenprofil gemäß den Merkmalen von einem der vorangegangenen Ansprüche,
mit einer Erstreckungshöhe T₂ des radial inneren Erstreckungsabschnitts (8) und mit einer Erstreckungshöhe T₁ des radial äußeren Erstreckungsabschnitts (7), die mit (2T₁) ≥T₂ > T₁ ausgebildet ist.

9. Laufstreifenprofil gemäß den Merkmalen von einem der vorangegangenen Ansprüche,
mit einer maximalen Erstreckungshöhe T der linien- oder nutförmigen Vertiefung (6) mit 10mm≤T≤25mm.

10. Laufstreifenprofil gemäß den Merkmalen von einem der vorangegangenen Ansprüche,
bei welchem die Öffnungsbreite B des Öffnungskanals (8) mit 1,5mm ≤ B ≤ 6mm ausgebildet ist.

11. Laufstreifenprofil gemäß den Merkmalen von Anspruch 1,
bei welchem der Fahrzeugluftreifen ein Traktionsreifen für Nutzfahrzeuge ist.

## Claims

1. Tread profile of a vehicle tyre, in particular for utility vehicles, with radially raised profile elements (1, 2, 3) which are spaced apart from one another by grooves (4, 5), with narrow, linear or furrow-shaped depressions (6) in one or more profile elements (1), said depressions, in each case oriented with their main direction of extent component in the axial direction A of the vehicle tyre, extending through the respective profile element (1) and leading into grooves (4, 5) bounding the profile element (1), wherein one or more narrow, linear or furrow-shaped depressions (6) are formed in the radial direction R in the tyre with a radially inner extent section of extent height T₂ and a radially outer extent region of extent height T₁, wherein the radially inner extent section extends in the radial direction R from the deepest point of the depression base (9) as far as the radially outer extent region, and the radially outer extent region extends from the radially inner extent region as far as the surface (11) which bounds the profile element (1) radially to the outside and forms the ground contact surface, and wherein the furrow-shaped depression (6) is designed in the radially outer extent region as a sipe (7) with a sipe width D and in the radially inner extent region as a tubular opening channel (8) with a maximum opening width B, where B≥(2D),
**characterized in that**
a plurality of dome-shaped radial elevations (10) are formed on the depression base (9), which bounds the tubular opening channel (8) radially to the inside, said elevations being distributed along the, in particular entire, extent length of the depression base (9).

2. Tread profile according to the features of Claim 1,
wherein the dome-shaped elevations (10) in the section planes thereof along the radial extent thereof from the summit (S) thereof as far as the depression base (9) are formed with circular, oval or elliptical section contour lines.

3. Tread profile according to the features of Claim 1 or 2,
wherein the dome-shaped radial elevations (10) are in the form of spherical caps.

4. Tread profile according to the features of one of the preceding claims,
wherein the dome-shaped elevations (10) are formed with a maximum extent height h₁ of 1.5 mm≤h₁≤3 mm, as measured in the radial direction R of the tyre from the depression base (9) as far as the summit (S) of the dome-shaped elevation (10).

5. Tread profile according to the features of one of the preceding claims,
wherein the dome-shaped elevations (10) are formed with a maximum extent length B₁ of 2 mm≤B₁≤6 mm, as measured in the depression base (9) in the direction of extent of the depression base (9).

6. Tread profile according to the features of one of the preceding claims,
wherein the profile elements (2) are profile bands, in particular circumferential ribs, which are bounded by circumferential grooves (4, 5).

7. Tread profile according to the features of one of the preceding claims,
with an extent height T₂ of the radially inner extent section (8), which extent height is formed by 2h₁≤T₂≤(2/3)T, wherein T is the maximum extent height of the linear or furrow-shaped depression (6).

8. Tread profile according to the features of one of the preceding claims,
with an extent height T₂ of the radially inner extent section (8) and with an extent height T₁ of the radially outer extent section (7), which extent height T₁ is formed by (2T₁)≥T₂>T₁.

9. Tread profile according to the features of one of the preceding claims,
with a maximum extent height T of the linear or furrow-shaped depression (6) of 10 mm≤T≤25 mm.

10. Tread profile according to the features of one of the preceding claims, in which the opening width B of the opening channel (8) is formed by 1.5 mm≤B≤6 mm.

11. Tread profile according to the features of Claim 1,
in which the vehicle tyre is a traction tyre for utility vehicles.

## Revendications

1. Profil de bande de roulement d'un pneumatique de véhicule, en particulier pour des véhicules utilitaires, comprenant des éléments profilés (1, 2, 3) rehaussés radialement, espacés les uns des autres par des gorges (4, 5), avec des renfoncements étroits (6) en forme de lignes ou de rainures dans un ou plusieurs éléments profilés (1), qui s'étendent à chaque fois à travers l'élément profilé respectif (1) de manière orientée avec leur composante directionnelle d'étendue principale dans la direction axiale A du pneumatique de véhicule et qui débouchent dans des gorges (4, 5) limitant l'élément profilé (1), un ou plusieurs renfoncements étroits (6) en forme de lignes ou de rainures étant réalisés dans le pneu dans la direction radiale R avec une section d'étendue radialement interne de hauteur d'étendue T₂ et une région d'étendue radialement externe de hauteur d'étendue T₁, la section d'étendue radialement interne dans la direction radiale R s'étendant depuis le point le plus profond du fond du renfoncement (9) jusqu'à la région d'étendue radialement externe et la région d'étendue radialement externe s'étendant depuis la région d'étendue radialement interne jusqu'à la surface (11) formant la surface de contact avec le sol, limitant radialement vers l'extérieur l'élément profilé (1), et le renfoncement en forme de rainure (6) étant réalisé dans la région d'étendue radialement externe en tant que fine entaille (7) avec une largeur d'entaille D et dans la région d'étendue radialement interne en tant que canal d'ouverture de forme tubulaire (8) avec une largeur d'ouverture maximale B, avec B ≥ (2D), **caractérisé en ce que**
plusieurs rehaussements radiaux en forme de coupelle (10) répartis le long - notamment de la totalité - de la longueur d'étendue du fond du renfoncement (9) sont réalisés au niveau du fond du renfoncement (9) limitant radialement vers l'intérieur le canal d'ouverture de forme tubulaire (8).

2. Profil de bande de roulement selon les caractéristiques de la revendication 1,
dans lequel les rehaussements en forme de coupelle (10) sont réalisés dans leur plan de coupe le long de leur étendue radiale depuis leur sommet (S) jusqu'au fond du renfoncement (9) avec des lignes de contour en coupe circulaires, ovales ou elliptiques.

3. Profil de bande de roulement selon les caractéristiques de la revendication 1 ou 2,
dans lequel les rehaussements radiaux en forme de coupelle (10) sont réalisés en forme de calottes sphériques.

4. Profil de bande de roulement selon les caractéristiques de l'une quelconque des revendications précédentes,
dans lequel les rehaussements en forme de coupelle (10) sont réalisés avec une hauteur d'étendue maximale h₁ mesurée depuis le fond du renfoncement (9) jusqu'au sommet (S) du rehaussement en forme de coupelle (10) dans la direction radiale R du pneu avec 1,5 mm ≤ h₁ ≤ 3 mm.

5. Profil de bande de roulement selon les caractéristiques de l'une quelconque des revendications précédentes,
dans lequel les rehaussements en forme de coupelle (10) sont réalisés avec une longueur d'étendue maximale B₁ mesurée dans le fond du renfoncement (9) dans la direction d'étendue du fond du renfoncement (9) avec 2 mm ≤ B₁ ≤ 6 mm.

6. Profil de bande de roulement selon les caractéristiques de l'une quelconque des revendications précédentes,
dans lequel les éléments profilés (2) sont des bandes profilées, en particulier des nervures périphériques, qui sont limitées par des gorges périphériques (4, 5).

7. Profil de bande de roulement selon les caractéristiques de l'une quelconque des revendications précédentes,
avec une hauteur d'étendue T₂ de la section d'étendue radialement interne (8) qui est réalisée avec 2h₁ ≤ T₂ ≤ (2/3)T, T étant la hauteur d'étendue maximale du renfoncement (6) en forme de ligne ou de rainure.

8. Profil de bande de roulement selon les caractéristiques de l'une quelconque des revendications précédentes,
avec une hauteur d'étendue T₂ de la section d'étendue radialement interne (8) et avec une hauteur d'étendue T₁ de la section d'étendue radialement externe (7) qui est réalisée avec (2T₁) ≥ T₂ > T₁.

9. Profil de bande de roulement selon les caractéristiques de l'une quelconque des revendications précédentes,
avec une hauteur d'étendue maximale T du renfoncement (6) en forme de ligne ou de rainure avec 10 mm ≤ T ≤ 25 mm.

10. Profil de bande de roulement selon les caractéristiques de l'une quelconque des revendications précédentes,
dans lequel la largeur d'ouverture B du canal d'ouverture (8) est réalisée avec 1,5 mm ≤ B ≤ 6 mm.

11. Profil de bande de roulement selon les caractéristiques de la revendication 1, dans lequel le pneumatique de véhicule est un pneu de traction pour véhicules utilitaires.
